Europäisches Patentamt

European Patent Office

Office européen des brevets

(11) Numéro de publication: **0 420 346 B1**

# FASCICULE DE BREVET EUROPEEN

(45) Date de publication de fascicule du brevet: **03.08.94** (51) Int. Cl.⁵: **G01S 7/52**, G10K 11/34

(21) Numéro de dépôt: **90202537.8**

(22) Date de dépôt: **25.09.90**

(54) **Echographe ultrasonore utilisant un dispositif numérique de formation de voies en réception.**

(30) Priorité: **29.09.89 FR 8912762**

(43) Date de publication de la demande:
**03.04.91 Bulletin 91/14**

(45) Mention de la délivrance du brevet:
**03.08.94 Bulletin 94/31**

(84) Etats contractants désignés:
**DE FR GB**

(56) Documents cités:
**EP-A- 0 169 123**
**EP-A- 0 245 740**

**JOURNAL OF THE ACOUSTICAL SOCIETY OF AMERICA vol. 63, no. 2, février 1978, NewYork,USA pages 425 - 434; R.G. PRIDHAM et al.: "A novel approach to digital beamforming"**

**IEEE JOURNAL OF OCEANIC ENGINEERING vol. OE-11, no. 1, janvier 1986, New York,USA pages 123 - 126; P. DA SYLVA et al.: "A reconfigurable real-time interpolation beamformer"**

(73) Titulaire: **LABORATOIRES D'ELECTRONIOUE PHILIPS**
**22, avenue Descartes**
**F-94453 Limeil-Brévannes Cédex(FR)**
(84) Etats contractants désignés:
**FR**

(73) Titulaire: **N.V. Philips' Gloeilampenfabrieken**
**Groenewoudseweg 1**
**NL-5621 BA Eindhoven(NL)**
(84) Etats contractants désignés:
**DE GB**

(72) Inventeur: **Bernard, Xavier**
**Société Civile S.P.I.D.**
**156 boulevard Haussmann, F-75008 Paris(DE)**

(74) Mandataire: **Pyronnet, Jacques et al**
**Société Civile S.P.I.D.**
**156, Boulevard Haussmann**
**F-75008 Paris (FR)**

Rank Xerox (UK) Business Services
(3.10/3.09/3.3.3)

## Description

La présente invention concerne un échographe ultrasonore comprenant un transducteur piézoélectrique composé de M transducteurs élémentaires fonctionnant à la fréquence centrale $f_c$ et relié à un dispositif de balayage électronique, un étage d'émission d'un faisceau ultrasonore et un étage de réception et de traitement des signaux echographiques renvoyés vers chaque transducteur élémentaire, ledit étage de réception et de traitement comportant un dispositif de formation de M voies qui, pour chaque voie, comporte un convertisseur analogique/numérique à fréquence d'échantillonnage $f_e$.

L'invention trouve une application particulièrement avantageuse dans le domaine de l'échographie médicale, et plus spécialement dans celui de la formation d'images d'organes.

L'étage de réception et de traitement des échographes conformes au préambule doit réaliser la fonction connue sous le nom de formation de voies. Cette opération consiste à focaliser le faisceau ultrasonore en réception, c'est-à-dire, en pratique, à sommer en phase les M échos reçus par les M transducteurs élémentaires venant d'un même point d'exploration. Comme les différents transducteurs élémentaires ne sont pas situés à la même distance du point de focalisation, le dispositif de formation de voies comprend essentiellement des lignes à retard qui permettent de compenser ces écarts de distance et d'amener tous les échos en phase pour sommation.

L'exploration échographique s'effectue selon plusieurs directions, l'ensemble de ces directions s'étendant dans un plan passant par les M transducteurs élémentaires disposés généralement en ligne sous forme d'une barrette qui peut être soit une barrette linéaire soit une barrette de phase. Dans le premier cas, les différentes directions d'exploration sont parallèles entre elles dans le plan d'exploration et dans le cas de la barrette de phase, ces directions constituent un balayage sectoriel. Dans les deux cas, l'exploration s'effectue par focalisation sur plusieurs points allant du plus proche au plus lointain pour une direction donnée puis passage par pas à une direction adjacente suivante. Pour ne pas compliquer l'exposé on se limitera à la focalisation sur plusieurs points d'une direction d'exploration donnée. On notera aussi que, dans les deux cas (barrette linéaire et barrette de phase), l'étage de réception fonctionne à raison d'une voie par transducteur élémentaire soit M voies pour M transducteurs.

La formation de voies s'effectue généralement de façon classique par traitement analogique, chaque voie étant constituée par un ensemble de lignes à retard commutables entre elles de façon à obtenir, pour chaque point de focalisation d'une direction d'exploration donnée, la mise en phase correcte pour ce point. Les signaux retardés avec des retards différents sont ensuite sommés. Il est ainsi possible d'obtenir quelques points de focalisation par direction, de l'ordre de 15 à 20 points. A chacun de ces points est associé un petit domaine de netteté (l'équivalent d'une profondeur de champ en optique), ce qui permet de reconstruire le signal après le dispositif de formations de voies en vue de la formation d'images d'organes. La précision que l'on obtient, en analogique peut être cependant considérée comme insuffisante et lorsqu'on souhaite obtenir un plus grand nombre de points par direction d'exploration, il est très avantageux d'adopter un dispositif de formation de voies numérique dans lequel chaque voie comporte à son entrée un convertisseur analogique/numérique dont la fréquence d'échantillonnage est notée $f_e$.

La fréquence $f_e$ doit satisfaire le critère de Nyquist et par ailleurs, pour avoir une grande précision de focalisation, il y a avantage à ce que le pas (la période) d'échantillonnage soit le plus petit possible, ce qui suppose de pouvoir travailler à une fréquence d'echantillonnage $f_e$ très élevée. Toutefois, le coût des composants rapides est tel qu'il n'est pas envisageable d'augmenter de façon très sensible la fréquence $f_e$, d'autant plus que le nombre de composants utilisés dans les architectures de formation de voies fonctionnant de façon analogique, est déjà très grand. Une première approche pour la réalisation d'un dispositif de formation de voies numérique consiste à transposer directement le dispositif analogique en munissant chaque voie d'un dispositif de retard numérique variable tel que registre à décalage ou mémoire FIFO, commandé à partir d'une mémoire préprogrammée de façon à obtenir des retards par pas, variables entre voies à un instant donné et aussi variables sur une voie donnée, d'un instant à un autre.

Nous reviendrons ci-dessous sur la valeur de ces retards dont le pas élémentaire est égal à la période d'échantillonnage $1/f_e$.

Lorsque le pas de retard élémentaire souhaité est inférieur à $1/f_e$, il se pose le problème technique d'améliorer cependant le signal de sortie de chaque voie. Ce problème technique est abordé par exemple de la façon décrite dans la publication : Journal of the Acoustical Society of America Vol.63, n°2, février 1978 New York USA pages 425-434. Dans le dispositif de formation de voies décrit dans cette publication, la structure reste sensiblement la même que celle transposée de la structure analogique, à savoir qu'il n'y a qu'un dispositif de retard numérique par voie. Cependant, selon une structure particulière, un filtre interpolateur inséré dans chaque voie permet d'améliorer le signal de sortie de chaque voie au prix, il est vrai, d'un changement de fréquence entre l'entrée et la sortie du dispositif de formation de voies.

La présente invention se propose de résoudre le problème technique indiqué ci-dessus de façon différente et propre à améliorer encore plus le signal de sortie de chaque voie.

Un but de l'invention est de réaliser un dispositif de formation de voies numérique utilisant des interpolateurs dans lesquels tous les éléments sont commandés à la fréquence d'échantillonnage $1/f_e$.

Un autre but est de réaliser un dispositif de formation de voies numérique utilisant N filtres interpolateurs par voie en parallèle, N étant de rapport entre la période d'échantillonnage $1/f_e$ et le pas de retard élémentaire souhaité $1/Nf_e$.

Encore un autre but est de pouvoir choisir, à chaque période d'échantillonnage, le point, interpolé ou non à partir des échantillons d'entrée de chaque voie, qui se rapproche le plus du pas de retard élémentaire souhaité.

Ces buts sont atteints grâce au fait que ledit étage de réception et de traitement de l'échographe ultrasonore défini en préambule est remarquable en ce qu'il comporte en outre, pour chaque voie, des moyens de retard numériques par pas de retard $1/f_e$, et un circuit d'interpolation et de choix parmi N échantillons pour chaque échantillon d'entrée constitué par :

- N chaînes de traitement parallèles (j = 1,..., N), N-1 desdites chaînes comprenant chacune un filtre numérique d'interpolation fournissant des échantillons décalés de $j/Nf_e$ par rapport au signal non interpolé de la Nième chaîne restante, cette dernière chaîne comportant une ligne à retard fixe de compensation pour compenser le retard introduit par ledit filtre d'interpolation de façon à obtenir un retard fixe, identique, multiple de $1/f_e$ pour toutes les chaînes d'une voie donnée pendant une période $1/f_e$ donnée,
- et un multiplexeur desdites N chaînes parallèles pour sélectionner à chaque période $1/f_e$ l'une parmi les N chaînes,

lesdits moyens de retard numériques étant commandes pour fournir à la cadence $f_e$, un retard égal à $k/f_e$ y compris ledit retard fixe de compensation (k entier), la valeur de k, preprogrammée, étant variable selon les M voies pour une période d'échantillonnage donnée et variable, pour chaque voie, d'une période d'échantillonnage à la suivante.

Ainsi, le retard appliqué à chacune des voies en réception de l'échographe selon l'invention, le même pour toutes les N chaînes, se divise en deux parties, à savoir une partie fixe constituée par la ligne à retard de compensation ou le retard du filtre d'interpolation qui est le même, sur chaque chaîne, et une partie commandable disposée en aval réglé à la même valeur sur chaque chaîne. La somme de ces deux retards est égale à un multiple k de $1/f_e$. On peut montrer que les retards à appliquer dans chaque voie, lorsque l'exploitation s'éloigne dans une direction donnée, vont en augmentant, la rotation de phase du signal échographique se faisant à une cadence plus lente que la fréquence d'échantillonnage $f_e$. Ceci conduirait, dans une voie simplement transposée de l'analogique au numérique à obtenir en sortie de chaque voie, des échantillons qui ne peuvent être autres que les échantillons d'entrée, c'est-à-dire séparés au moins par la durée $1/f_e$ ce qui reviendrait à répéter de temps en temps certains échantillons en sortie, comme expliqué plus en détail plus loin. Par contre, avec le dispositif selon l'invention et moyennant une commande adéquate du multiplexeur de chaque voie, il devient possible, lors de chaque passage d'un pas de retard élémentaire souhaité (dit pas réduit) au suivant, d'obtenir en sortie du multiplexeur, une valeur d'échantillon qui n'est séparée de la précédente que de la valeur $1/Nf_e$, ce qui permet d'obtenir des échantillons de sortie tous différents. La suite d'echantillons obtenus en sortie du multiplexeur rend ainsi mieux compte du signal de chaque voie que celle qui serait obtenue en l'absence de multiplexage.

Certains modes de réalisation de l'invention visent à minimiser le nombre de lignes à retard nécessaire au dispositif de formation de voies.

En conclusion, pour une fréquence de travail $f_e$ donnée, l'échographe ultrasonore selon l'invention fournit un choix entre N échantillons par période $1/f_e$, ce qui permet d'utiliser des composants basse fréquence, et donc de diminuer le prix de revient de l'appareil, alors que, par ailleurs, la précision de focalisation est améliorée. Le coût de l'échographe est encore réduit du fait du traitement numérique des signaux beaucoup plus avantageux que les architectures analogiques connues qui nécessitent de nombreux réglages, des développements longs et onéreux et plus difficiles à intégrer que les circuits logiques. De plus, l'échographe selon l'invention présente l'avantage très important que, dans la mesure où il permet d'accéder à tous les points de retard, ledit dispositif numérique de formation de voies peut être adapté à tout type de sonde. Cette faculté de pouvoir choisir n'importe quel retard à tout moment offre également la possibilité de mettre en oeuvre des formations de voies très variées, notamment la focalisation de poursuite ou des images "compound".

La description qui va suivre en regard des dessins annexés, donnés à titre d'exemples non limitatifs, fera bien comprendre en quoi consiste l'invention et comment elle peut être réalisée.

La figure 1 est le schéma général d'un échographe ultrasonore selon l'invention.

La figure 2 est le schéma d'un dispositif de formation de voies de l'échographe de la figure 1.

La figure 3 est le schéma d'une première variante du dispositif de formation de voies de la figure 2.

La figure 4 est le schéma d'une deuxième variante du dispositif de formation de voies de la figure 2.

Les figures 5 et 6 donnent le schéma de deux filtres numériques d'interpolation qui peuvent être utilisés dans les dispositifs de formation de voies des figures 2 à 4.

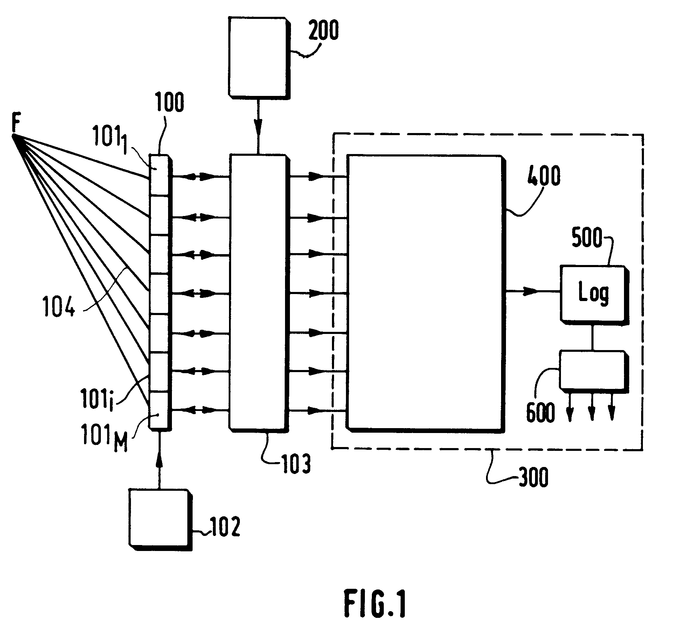

La figure 1 est le schéma d'un échographe ultrasonore comprenant un transducteur piézoélectrique 100 composé de M transducteurs élémentaires $101_i$ ($i = 1,2...,M$) fonctionnant à la fréquence centrale $f_c$, et relié à un dispositif 102 de commande de balayage électronique. Un étage 200 d'émission assure la formation d'un faisceau ultrasonore d'exploration tandis qu'un étage 300 de réception et de traitement des signaux echographiques renvoyés vers chaque transducteur élémentaire $101_i$ permet de réaliser des images échographiques du milieu observé.

De façon classique, l'étage d'émission 200 comprend un séquenceur composé d'un oscillateur et d'un diviseur de fréquence qui commande à la fréquence de récurrence choisie un générateur dont les signaux électriques d'excitation sont envoyés vers le transducteur 100 qui les convertit en trains périodiques de signaux impulsionnels ultrasonores. Un séparateur 103 des étages d'émission 200 et de réception et de traitement 300 est inséré entre le transducteur 100 et lesdits étages 200, 300 et évite l'aveuglement des circuits de réception par les signaux d'émission.

L'échographe ultrasonore représenté à la figure 1 est un échographe à barrette de phase 100 qui explore, comme représenté sur la figure, dans la direction angulaire 104 à laquelle appartient le point de focalisation F. L'exploration se continue dans la même direction 104 selon des points de focalisation de plus en plus éloignés que F de la barrette de phase.

L'étage de réception et de traitement 300 comprend en sortie du séparateur 103, un dispositif 400 de formation de voies, un amplificateur de compression logarithmique 500, un dispositif de mémorisation et de conversion de balayage 600 commandant, par exemple, un dispositif de visualisation.

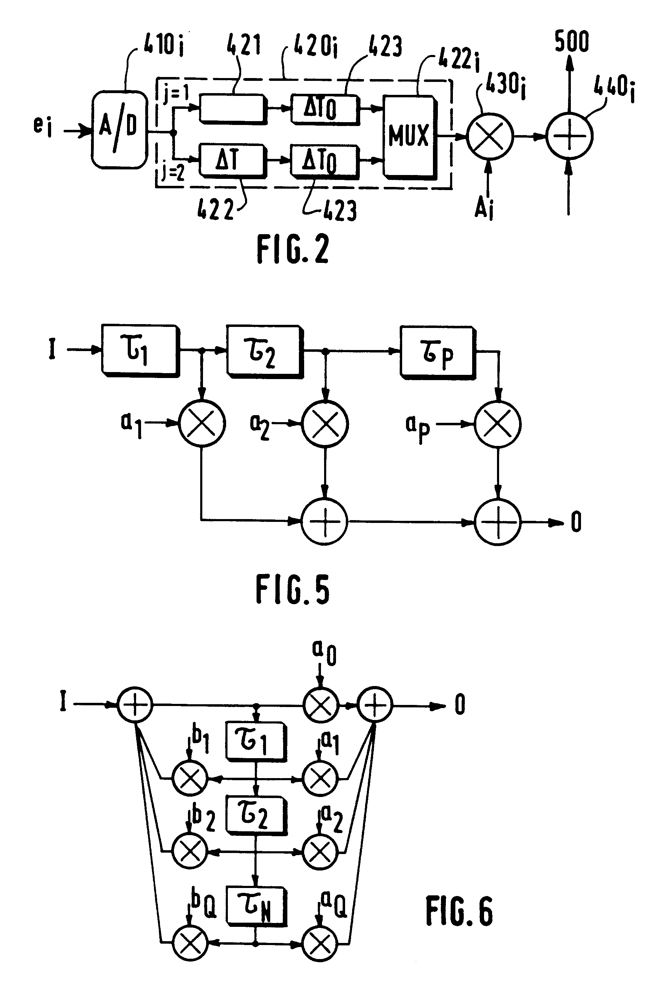

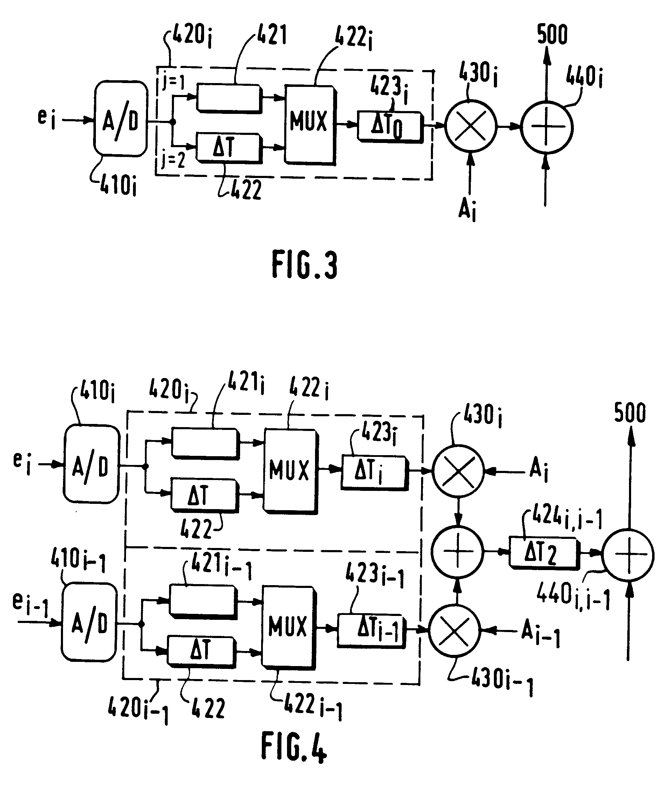

La figure 2 montre un dispositif de formation des voies qui, pour chaque voie i, comprend un convertisseur analogique-numérique $410_i$ qui transforme l'écho $e_i$ reçu par le ième transducteur élémentaire en un signal numérique, après filtrage et amplification. Comme l'indique la figure 2, le dispositif de formation de voies comporte un circuit $420_i$ d'interpolation et de choix d'échantillons constitué ici de $N = 2$ chaînes de traitement parallèles, comprenant l'une ($j = 1$) un filtre numérique 421 d'interpolation et une ligne à retard 423 donnant un retard $\Delta To$ multiple du pas de retard $1/f_e$, alors que l'autre chaîne ($j = 2$) est constituée d'une ligne à retard 422 compensant le retard $\Delta T$ introduit par le filtre 421 d'interpolation sur la chaîne $j = 1$ et d'une ligne à retard 423 identique à celle de la chaîne $j = 1$. La chaîne $j = 2$ fournit, de façon classique, un signal échantillonné à la fréquence $f_e$ que l'on peut retarder de $k/f_e$ ($k/f_e - T\Delta = To$), k, entier, étant choisi en fonction de la focalisation en réception souhaitée. La ligne à retard numérique 422 n'est pas programmable et sa valeur peut être différente, d'une voie à l'autre.

Par contre, les lignes à retard numériques 423 de la figure 2 et les autres lignes à retard $423_i$ de la figure 3 et $423_i$, $423_{i-1}$, $424_i$, $_{i-1}$ de la figure 4 sont toutes commandables, étant constituées par des mémoires FIFO ou des registres à décalage. Les valeurs des retards variables sont multiples de $1/f_e$ de façon à rester synchrones avec le convertisseur, tous les éléments du dispositif fonctionnant à la fréquence d'horloge $1/f_e$ de façon non représentée pour ne pas surcharger les dessins.

Dans le cas de registres à décalage un pointeur, adressé à partir d'une mémoire préprogrammée contenant les valeurs de retard nécessaire pour chaque période d'horloge $1/f_e$, sélectionne, pour chaque registre, l'une des sorties à raison d'une sortie possible par élément du registre. A une configuration de retards donnée, ces retards étant différents d'une voie à l'autre, correspond un point de focalisation dans la direction d'exploration 104. Ceci est connu des dispositifs de formation de voies numériques antérieurs et ne nécessite pas d'être représenté ni décrit plus en détail. La chaîne $j = 1$, figure 2, donne une autre série d'échantillons que celle de la chaîne $j = 1$, également à la fréquence d'échantillonnage $f_e$, calculés par le filtre 421 d'interpolation qui est conçu pour que cette autre série d'échantillons soit décalée d'un demi pas d'échantillonnage $1/2f_e$ par rapport aux échantillons directs de la chaîne $j = 2$.

On notera que, plus généralement, pour N supérieur à 2, les N-1 interpolateurs sont conçus pour fournir, sur deux chaînes adjacentes j et $j + 1$, quel que soit j, deux séries d'échantillons décalés entre eux de $1/Nf_e$. Ainsi en sortie du circuit $420_i$, figure 2, on dispose de deux (respectivement N) séries de signaux, directs ou interpolés, dont l'ensemble représente un signal à la fréquence $2f_e$ (respectivement $Nf_e$). Un multiplexeur $422_i$ des 2 (ou N) lignes parallèles choisit celui des signaux direct ou interpolé qui convient au retard désiré pour la voie i. Le multiplexeur fonctionne à la fréquence $f_e$ et le signal de commande de choix est, au même titre que les signaux de commande des lignes à retard variables fourni par une mémoire préprogrammée, à raison d'une mémoire par multiplexeur (non représentée). La résolution en focalisation se trouve améliorée puisque selon le dispositif de formation de voies numérique connu, on ne peut réaliser que des retards variant par pas de 1 du pas d'échantillonnage soit $1/f_e$, $2/f_e$, $3/f_e$, ..., alors que le dispositif décrit en regard de la figure 2 permet d'obtenir en outre les retards intermédiaires $1,5/f_e$, $2,5/f_e$, $3,5/f_e$... Dans l'exemple de la figure 1, N a été pris égal à 2, mais il est bien entendu qu'on pourrait donner à N des valeurs supérieures 3, 4, 5..., ce qui revient à multiplier la résolution de focalisation par 3, 4, 5 ...

Un exemple fourni par le tableau ci-dessous, pour $N = 2$, permet de mieux faire comprendre comment la résolution de focalisation peut être obtenue selon l'invention.

```
échantillon direct      0    1    2    3    4    5    6    7    8    9

échantillon interpolé   -   0,5  1,5  2,5  3,5  4,5  5,5  6,5  7,5  8,5

retard réduit (λ/4)     3    3    3    3    3   3,5  3,5  3,5   4    4

échantillon de sortie   -    -    -    0    1   1,5  2,5  3,5   4    5
```

On a exprimé, dans le tableau, le pas élémentaire de retard souhaité (pas réduit) en nombre fractionnaire de $\lambda/4$, $\lambda$ étant la longueur d'onde des signaux en provenance des transducteurs élémentaires, le pas réduit correspondant en fait à une différence de marche des signaux échographiques de $\lambda/8$ alors que la période d'échantillonnage correspond au double, soit $\lambda/4$. On notera aussi que le retard va en croissant, dans la direction d'exploration comme déjà indiqué plus haut.

Selon le tableau, on considère que le retard souhaité est égal à $3\lambda/4$ a l'instant d'échantillonnage 0.

A l'instant 3, le numéro d'échantillon 0 apparaît en sortie de la ligne à retard 423, puis l'échantillon 1 à l'instant 4. Si le retard devient $3,5 \lambda/4$ à l'instant 5, on a le choix entre le numéro d'échantillon direct 2 et le numéro d'échantillon interpolé 1,5 (échantillon interpolé entre les échantillons 1 et 2). Le multiplexeur est alors commandé pour commuter sur la chaîne $j = 1$ qui comporte l'interpolateur et fournit l'échantillon 1,5, puis, à l'instant 6 l'échantillon 2,5 et l'échantillon 3,5 à l'instant 7.

Si le retard passe de 3,5 à 4 à l'instant 8, le multiplexeur est à nouveau commuté sur la chaîne directe de façon à fournir l'échantillon direct, moyennant une augmentation concomitante égale à $1/f_e$ du retard fourni par la ligne à retard 423. L'échantillon fourni ensuite sur la chaîne directe est l'échantillon 5 à l'instant 9.

Dans un dispositif de formation de voies numérique directement transposé du dispositif analogique, il ne serait par contre pas possible de prendre en compte les retards réduits intermédiaires tels que $3,5 \lambda/4$ et on serait limité, pour chaque retard réduit intermédiaire, à fournir le même échantillon d'entrée pour deux coups d'horloge $f_e$ consécutifs en sortie de la ligne à retard de la voie considérée.

Dans le but d'éliminer les pieds dans la courbe de directivité du transducteur piézoélectrique, on effectue une opération d'apodisation, connue en soi, qui consiste à pondérer les signaux de chaque voie $i$ par un coefficient $A_i$, valeur au transducteur élémentaire $101_i$ considéré, d'une courbe gaussienne centrée au milieu du transducteur piézoélectrique 100. Cette apodisation est réalisée par le multiplieur $430_i$. La Demanderesse a montré que ledit multiplieur d'apodisation pouvait être simplement constitué d'un nombre de registres à décalage au plus égal à celui du nombre de bits des coefficients d'apodisation et d'un additionneur, sans nuire de façon sensible à l'efficacité de l'apodisation.

Après apodisation éventuelle, tous les signaux provenant de chaque voie $i$ ainsi remis en phase sont additionnés par des additionneurs $440_i$ et envoyés vers le circuit 500.

La figure 5 donne un premier exemple de filtre numérique 421 d'interpolation pouvant être utilisé, de préférence, dans le circuit $420_i$ de multiplication de fréquence. Ce filtre est connu sous le nom de FIR pour Finite Impulse Response. L'entrée et la sortie de ce filtre sont désignés par I et 0 respectivement, il comprend des lignes à retard $\tau_1, ... \tau_p$ ainsi que des multiplieurs et des additionneurs. Ce type de filtre a l'avantage d'être disponible commercialement.

Certaines précautions étant prises pour choisir une fréquence d'échantillonnage assez nettement supérieure à la bande passante du signal échographique ultrasonore, il est possible d'utiliser des filtres qui réalisent une interpolation meilleure que l'interpolation linéaire, moyennant que ces filtres possèdent d'assez bonnes performances. Par exemple, le signal échographique a une fréquence centrale $f_c = 7,5MHz$, sa bande passante s'élève jusqu'à 10,5MHz et la fréquence d'échantillonnage est $f_e = 30MHz$. Dans ces conditions, des filtres d'interpolation utilisables sont par exemple des filtres ZR33891 commercialisés par la société américaine ZORAN qui fonctionnent à 30MHz sur 9 bits pour les données et les coefficients et intègrent 8 cellules. 3 puces seulement sont nécessaires pour réaliser le filtre d'interpolation. De plus, il est facile de modifier la valeur des P coefficients par utilisation de mémoires SRAM. D'une façon générale, pour un filtre FIR, le nombre et l'estimation de la valeur des coefficients peuvent être obtenus par l'utilisation d'algorithmes bien connus et optimisés.

La figure 6 montre un autre exemple de filtre numérique d'interpolation. Il s'agit du filtre IIR pour Infinite Impulse Response. Ce filtre connu exige moins de composants que le FIR, mais, par contre, il est plus difficile à optimiser et peut conduire à des filtres divergents.

Notons qu'en choisissant la fréquence d'échantillonnage $f_e$ égale à un multiple de la fréquence centrale $f_c$ de fonctionnement du transducteur piézoélectrique (par exemple $f_c = 10MHz$ et $f_e = 40MHz$), on rend fixes les coefficients des filtres d'interpolation quelle que soit la fréquence de fonctionnement $f_c$, ce qui permet d'éliminer les multiplieurs desdits filtres, d'où un gain en composants. A l'inverse, si la fréquence $f_e$ était indépendante de $f_c$, les coefficients d'interpolation devraient être adaptés à la fréquence $f_c$, et il faudrait maintenir les multiplieurs.

Dans le mode de réalisation de la figure 2, le nombre de lignes à retard numériques 423 est égal à j, leur longueur étant de l'ordre de 500 éléments. Il est donc souhaitable de diminuer si possible le volume de ces lignes, ce qui est l'objet des variantes des figures 3 et 4.

La figure 3 représente une variante du dispositif de la figure 2 dans laquelle une seule ligne 423 de retard $\Delta To$ est utilisée et placée à la suite du multiplexeur $422_i$. Ce mode de réalisation présente l'avantage de diviser au moins par 2 (par N) le nombre de lignes à retard et donc de diminuer le nombre de composants utilisés. Toutefois, la Demanderesse a établi que dans certains cas une erreur dans le retard appliqué pouvait se produire, notamment dans le cas de variation simultanée des valeurs des signaux de commande de la ligne à retard et du multiplexeur, ce qui rend moins performantes les variantes des figures 3 et 4.

La figure 4 montre une autre variante d'exécution du dispositif de la figure 2 ayant pour objet de diminuer encore le nombre de composants électroniques. Elle s'appuie sur l'idée que, même dans le cas de retards importants à appliquer, le retard entre voies consécutives est faible et n'exige que des lignes à retard courtes (de l'ordre de 20 éléments par exemple) donc moins onéreuses. La figure 4 illustre, de façon non limitative, l'exemple de deux voies consécutives. Le retard total a été séparé en deux : d'abord, un retard $\Delta T_i, \Delta T_{i-1}$ faible entre les voies consécutives pris en compte à l'aide d'un dispositif identique à celui de la figure 3, puis, un second retard $\Delta T_{i, i-1}$ plus important (du même ordre que celui apporté par les lignes $423_i$ et 423), introduit après sommation des deux voies i et i-1. Le nombre de voies ainsi groupées peut valoir 3, 4, 5... On notera que les lignes $423_i$, $423_{i-1}$ et $424_{i, i-1}$ reçoivent toutes les trois une commande de retard séparée.

L'invention ne se limite pas à ce qui a été décrit ci-dessus. Notamment, outre les échographes à barrette linéaire de transducteurs, l'invention s'applique aussi a des échographes à réseau annulaire de transducteurs.

## Revendications

1. Echographe ultrasonore comprenant un transducteur piézoélectrique (100) composé de M transducteurs élémentaires ($101_i$, $i = 1,...,M$) fonctionnant à la fréquence centrale $f_c$ et relié à un dispositif de balayage électronique (102), un étage (200) d'émission d'un faisceau ultrasonore et un étage (300) de réception et de traitement des signaux échographiques renvoyés vers chaque transducteur élémentaire ($101_i$), ledit étage (300) de réception et de traitement comportant un dispositif (400) de formation de M voies qui, pour chaque voie (i), comporte un convertisseur analogique/numérique ($410_i$) à fréquence d'échantillonnage $f_e$ caractérisé en ce qu'il comporte en outre, pour chaque voie, des moyens de retard numériques (423, $423_i$) par pas de retard $1/f_e$, et un circuit ($420_i$) d'interpolation et de choix parmi N échantillons pour chaque échantillon d'entrée constitué par :
   - N chaînes de traitement parallèles ($j = 1,...,N$), N-1 desdites chaînes comprenant chacune un filtre numérique d'interpolation (421) fournissant des échantillons décalés de $j/Nf_e$ par rapport au signal non interpolé de la Nième chaîne, la Nième chaîne restante comportant une ligne à retard fixe de compensation (422) pour compenser le retard introduit par ledit filtre d'interpolation de façon à obtenir un retard fixe, identique, multiple de $1/f_e$ pour toutes les chaînes d'une voie donnée pendant une période $1/f_e$ donnée,
   - et un multiplexeur ($422_i$) desdites N chaînes parallèles pour sélectionner à chaque période $1/f_e$ l'une parmi les N chaînes,
   lesdits moyens de retard numériques étant commandés pour fournir, à la cadence $f_e$, un retard égal à $k/f_e$ y compris ledit retard fixe de compensation (k entier), la valeur de k, préprogrammée, étant variable selon les M voies pour une période d'échantillonnage donnée et variable, pour chaque voie, d'une période d'échantillonnage à la suivante.

**2.** Echographe ultrasonore selon la revendication 1, caractérisé en ce que lesdits moyens (423) de retard sont constitués par N lignes à retard ($\Delta$To) identiques placées sur chacune des N chaînes parallèles pour chaque voie.

**3.** Echographe ultrasonore selon la revendication 1, caractérisé en ce que lesdits moyens ($423_i$) de retard sont constitués par une seule ligne à retard ($\Delta$To) placée a la suite du multiplexeur ($422_i$).

**4.** Echographe ultrasonore selon la revendication 1, caractérisé en ce que lesdits moyens ($423_i$, $424_{i, i-1}$) de retard sont constitués par une ligne ($423_i$) à retard ($\Delta T_i$) de faible capacité placée à la suite du multiplexeur ($422_i$) et, par l'intermédiaire d'un additionneur, par une ligne ($424_{i, i-1}$) à retard ($\Delta T_{i, i-1}$) de grande capacité, ce dernier retard étant appliqué au signal résultant de la somme des signaux issus d'au moins deux voies consécutives (i, i-1) conjuguées.

**5.** Echographe ultrasonore selon l'une des revendications 1 à 4 caractérisé en ce que la fréquence d'échantillonnage $f_e$ est un multiple de la fréquence centrale $f_c$ de fonctionnement du transducteur piézoélectrique (100).

**6.** Echographe ultrasonore selon l'une des revendications 1 à 5, caractérisé en ce que chaque voie (i) comprend en sortie un multiplieur ($430_i$) d'apodisation.

**7.** Echographe ultrasonore selon la revendication 6, caractérisé en ce que ledit multiplieur ($430_i$) d'apodisation est constitué d'un nombre de registres à décalage au plus égal à celui du nombre de bits des coefficients d'apodisation et d'un additionneur.

**8.** Echographe ultrasonore selon l'une des revendications 1 à 7, caractérisé en ce que ledit filtre numérique ($421_j$) d'interpolation est un filtre F.I.R.

**Claims**

**1.** An ultrasonic echograph comprising a piezoelectric transducer (100) which is composed of M elementary transducers ($101_i$, i = 1, ..., M) which operate at the central frequency $f_c$ and are connected to a electronic scanning device (102), a stage (200) for transmitting an ultrasonic beam, and a stage (300) for receiving and processing echographic signals returned to each elementary transducer ($101_i$) , said receiving and processing stage (300) comprising a device (400) for forming M channels which comprises, for each channel (i), an analog-to-digital converter ($410_i$) which operates at the sampling frequency $f_e$, characterized in that it also comprises, for each channel, digital delay means (423,$423_i$) with a delay step of $1/f_e$, ad a circuit ($420_i$) for interpolation ad selection from N samples for each input sample, which circuit is formed by:
  - N parallel processing chains (j = 1,..., N), N-1 of said chains comprising a respective digital interpolation filter (421) which supplies samples which have been shifted by $j/Nf_e$ with respect to the non-interpolated signal of the $N^{th}$ chain, the remaining $N^{th}$ chain comprising a Bed delay compensation line (422) for compensating the delay introduced by said interpolation filter in order to obtain a fixed delay which is identical ad a multiple of $1/f_e$ for all chains of a given channel during a given period $1/f_e$,
  - ad a multiplexer ($422_i$) for said N parallel chains in order to select one of the N chains during each period $1/f_e$,

said digital delay means being controlled so as to deliver, at the rate $f_e$, a delay equal to $k/f_e$, including said fixed compensation delay (k integer), the programmed value of k being variable for the M channels for a given sampling period ad also being variable, for each channel, from one sampling period to the next.

**2.** An ultrasonic echograph as claimed in Claim 1, characterized in that said delay means (423) are formed by N identical delay lines ($\Delta$To) which are provided for each of the N parallel chains or each channel.

**3.** An ultrasonic echograph as claimed in Claim 1, characterized in that said delay means ($423_i$) are formed by a single delay line ($\Delta$To) connected subsequent to the multiplexer ($422_i$).

7

**4.** An ultrasonic echograph as claimed in Claim 1, characterized in that said delay means ($423_i$, $424_i$, $_{i-1}$) are formed y a delay line ($423_i$) with a small delay ($\Delta T_i$) which is connected ubsequent to the multiplexer ($422_i$) and, <u>via</u> an adder, by a line $424_{i,\ i-1}$ having a long delay ($\Delta T_{i,\ i-1}$), the latter delay being applied to the signal resulting from the summing of the signals supplied by at least two conjugate consecutive channels (i, i-1).

**5.** An ultrasonic echograph as claimed in any one of the Claims 1 to 4, characterized in that the sampling frequency $f_e$ is a multiple of the central operating frequency $f_c$ of the piezoelectric transducer (100).

**6.** An ultrasonic echograph claimed in any one of the Claims 1 to 5, characterized in that each channel (i) comprises a apodization multiplier ($430_i$) connected to its output.

**7.** An ultrasonic echograph as claimed in Claim 6, characterized in that said apodization multiplier ($430_i$) is formed by a number of shift registers which is at the most equal to the number of bits of the apodization coefficients, and by a adder.

**8.** An ultrasonic echograph as claimed in any one of the Claims 1 to 7, characterized in that said digital interpolation filter ($421_j$) is a F.I.R. filter.

**Patentansprüche**

**1.** Ultraschall-Echograph mit einem piezoelektrischen Ultraschallschwinger (100), der aus M Einzelschwingern ($101_i$ mit i = 1, 2, ..., M) besteht, die mit der Mittenfrequenz $f_c$ arbeiten und die jeweils angeschlossen sind an eine elektronische Abtastvorrichtung (102), an eine Ultraschallwellen-Sendestufe (200) und an eine Empfangs- und Verarbeitungsstufe (300) für die zu jedem Einzelschwinger ($101_i$) zurückgestrahlten Echosignale, wobei diese Empfangs- und Verarbeitungsstufe (300) eine Einrichtung (400) zur Formung von M Kanälen enthält, die ihrerseits für jeden Kanal (i) einen Analog/Digital-Wandler mit der Abtastfrequenz $f_e$ enthält, <u>dadurch gekennzeichnet,</u> daß er darüberhinaus für jeden Kanal digitale Verzögerungsmittel (423, $423_i$) mit der Verzögerungs-Grundschrittweite $1/f_e$, sowie für jedes Sample am Eingang eine Interpolations- und Auswahlschaltung ($420_i$) zwischen N Samples enthält, die ihrerseits besteht aus:
- N parallelen Verarbeitungsketten (j = 1, 2, ..., N), wobei N-1 dieser Verarbeitungsketten jeweils einen digitalen Interpolationsfilter (421) enthalten, der in Bezug auf das nicht interpolierte Signal der N-ten restlichen Verarbeitungskette um jeweils $j/NF_e$ verschobene Samples liefert, und wobei die N-te Verarbeitungskette eine feste Kompensations-Verzögerungsleitung (422) besitzt, mit der die durch den Interpolationsfilter bedingte Verzögerung dergestalt kompensiert wird, daß man eine feste, identische Verzögerung als Vielfaches von $1/f_e$ für alle Verarbeitungsketten eines gegebenen Kanals während einer gegebenen Periode $1/f_e$ erhält,
- sowie einem Multiplexer ($422_i$) für die N parallelen Verarbeitungsketten, um in jeder Periode $1/f_e$ eine von den N Verarbeitungsketten auszuwählen;
und wobei die digitalen Verzögerungsmittel so angesteuert werden, daß sie eine Verzögerung $k/f_e$ liefern, einschließlich der festen Kompensations-Verzögerung mit k ganzzahlig, und wobei die vorprogrammierten Werte von k für eine gegebene Samplingperiode in den M Kanälen, sowie für jeden Kanal von einer Samplingperiode zur nächsten veränderlich sind.

**2.** Ultraschall-Echograph nach Anspruch 1, <u>dadurch gekennzeichnet,</u> daß die Verzögerungsmittel (423) aus N identischen und in jede der N parallelen Verarbeitungsketten jedes Kanals eingefügten Verzögerungsleitungen ($\Delta To$) bestehen.

**3.** Ultraschall-Echograph nach Anspruch 1, <u>dadurch gekennzeichnet,</u> daß die Verzögerungsmittel ($423_i$) aus einer einzigen dem Multiplexer ($422_i$) nachgeschalteten Verzögerungsleitung ($\Delta To$) bestehen.

**4.** Ultraschall-Echograph nach Anspruch 1, <u>dadurch gekennzeichnet,</u> daß die Verzögerungsmittel ($423_i$,$424_i$, $_{i-1}$) aus einer dem Multiplexer ($422_i$) nachgeschalteten Verzögerungsmittel ($423_i$) kleiner Kapazität mit ($\Delta T_i$), sowie, unter Zwischenschaltung eines Addierers, aus einer Verzögerungsleitung ($424_i$, $_{i-1}$) großer Kapazität mit ($\Delta T_i$, $_{i-1}$) bestehen und wobei die letztgenannte Verzögerung auf das aus mindestens zwei aufeinanderfolgenden konjugierten Kanälen (i, i-1) gebildete Summensignal angewendet wird.

8

5. Ultraschall-Echograph nach einem der Ansprüche 1 bis 4, dadurch gekennzeichnet, daß die Sampling-frequenz $f_e$ ein Vielfaches der Mitten-Arbeitsfrequenz $f_c$ des piezoelektrischen Ultraschallschwingers (100) ist.

6. Ultraschall-Echograph nach einem der Ansprüche 1 bis 5, dadurch gekennzeichnet, daß der Ausgang jedes Kanals (i) einen Apodisations-Multiplizierer ($430_i$) enthält.

7. Ultraschall-Echograph nach Anspruch 6, dadurch gekennzeichnet, daß der Apodisations-Multiplizierer ($430_i$) aus einer Anzahl Schieberegister, die höchstens so groß ist wie die Anzahl Bits der Apodisations-Koeffizienten, sowie aus einem Addierer besteht.

8. Ultraschall-Echograph nach einem der Ansprüche 1 bis 7, dadurch gekennzeichnet, daß der digitale Interpolationsfilter ($421_i$) ein F.I.R.-Filter ist.

FIG.1

FIG.2

FIG.5

FIG.6

11

FIG.3

FIG.4